# EUROPEAN PATENT APPLICATION

(11) **EP 4 734 399 A1**
(43) Date of publication of application: **29.04.2026**
(21) Application number: 25209135.0
(22) Date of filing: 16.10.2025
(51) Int. Cl.: H04B 10/077, H04B 10/079, H04B 10/2575, H04B 10/272

(54) **PASSIVE OPTICAL NETWORK INCORPORATING FIBER MONITORING AT RECEIVING EQUIPMENT**

(30) Priority: 22.10.2024 US 202418923170
(71) Applicant: Nokia Solutions and Networks Oy, 02610 Espoo (FI)
(72) Inventor: HOUTSMA, Vincent, New Providence, 07974 (US); VAN VEEN, Doutje, New Providence, 07974 (US)
(74) Representative: Ipsilon Belgium

(57) **Abstract**

A polarization sensing element (30, 30A) is proposed to be used with one or more receivers in a PON (10) system, a separate polarization sensing element located with selected receivers in a one-to-one association. The polarization sensing element (30, 30A) is configured to track polarization changes in received signals while still using the IM-DD based transceivers to maintain compatibility with current (as well as future) IM-DD based PONs. Polarization sensing at several PON (10) receivers may be used to monitor conditions at the fiber spans forming the ODN (16) and report abnormal" conditions that may arise from the fiber itself (e.g., from a severe bend in a fiber span) or environmental changes at a fiber location (e.g., vibrations, excessive temperatures changes).

## Description

### Technical Field

Disclosed herein is an advance in passive optical networks (PONs) where location conditions at the fiber spans forming the optical distribution network (ODN) may be monitored at one or more PON receivers without impacting communication capabilities.

### Background

A passive optical network (PON) is a variety of fiber optic access network that uses a point-to-multipoint (P2MP) topology to deliver network access to end users. Typically, downstream transmissions are broadcast from an optical line terminal (OLT) at a central hub to a set of optical network units (ONUs) at disparate locations. Passive components such as fiber optic splitters distribute the downstream transmissions among the ONUs. Upstream signals from the set of ONUs are typically combined using time-division multiple access (TDMA) and delivered as a burst mode stream at the OLT.

One modulation scheme that has been favored for PON is intensity-modulated direction-detection (IM-DD). In IM-DD, a radio-frequency data signal modulates the intensity of an optical carrier. For demodulation at a PON receiver, the optical carrier is directly detected and converted to the electrical domain by a photodetector.

With the introduction of more premium services for business users and mobile transport over PON, it is becoming recognized that providing a means for sensing, monitoring and performing fault detection within an optical distribution network (ODN) between an OLT and the set of ONUs becomes highly desirable.

### Summary of Illustrative Embodiments

A polarization sensing element is proposed to be used with PON receivers at either the OLT and/or one or more of the ONUs, particularly with IM-DD PON receivers. The polarization sensing element is particularly configured to enable tracking of the polarization for sensing in PONs while still using the IM-DD based transceivers to maintain compatibility with current (as well as future) IM-DD based PONs. Polarization sensing at several PON receivers may be used to monitor conditions at the fiber spans forming the ODN and report "abnormal" conditions that may arise from the fiber itself (e.g., from a severe bend in a fiber span) or environmental changes at a fiber location (e.g., vibrations, excessive temperatures changes).

In one embodiment, a polarization sensing element may be coupled to an input of a PON receiver so as to analyze the received signal prior to performing data recovery from the receiver optical signal. An asymmetric splitter component may be used in this embodiment to direct a majority of the received signal power into the receiver, with the polarization sensing element requiring only a minimal power level (for example, as little as 1% of the total optical power) to properly function as a sensing device. A polarization beam splitter and a pair of photodiodes are used to create a pair of orthogonally-polarized signals that may be monitored; in particular, looking for changes in optical power present in each polarization state.

In a different embodiment where the PON receiver includes a semiconductor optical amplifier (SOA), the polarization sensing element may be coupled to an output (electrical) recovered data signal. The polarization-dependent gain exhibited by the SOA is tracked by the polarization sensing element, where the changes in gain are assumed to be related to changes in signal polarization associated with abnormalities arising along individual fiber spans within the ODN that form the signal path to the PON receiver.

In yet another embodiment, a polarization sensing element may be particularly configured for use with an ONU-based receiver. In this case, the polarization sensing element is formed to generate a "fault" message when polarization changes in the received signal exceed a given threshold. The fault message is forwarded to the associated ONU transmitter to be sent upstream to the OLT for further network maintenance operations, if necessary.

In another embodiment of the present disclosure, a plurality of ONUs within a PON may be equipped with polarization sensing elements. An OLT receiving fault messages from several ONUs at disparate locations is able to use this information to further track and isolate a particular fiber span that is exhibiting abnormal behavior.

When the disclosed polarization sensing element is used with an OLT-based receiver, the known burst schedule associated with time slot assignment in a time division multiplexed (TDM) architecture can be used to analyze the polarization sensing information for each ONU-OLT connection separately.

An exemplary embodiment of the disclosure may take the form of an apparatus comprising a polarization sensing element coupled to an optical receiver in a PON. The polarization sensing element is configured to extract polarization-dependent information from a received optical signal and monitor the extracted polarization-dependent information to recognize changes in polarization above a defined threshold, generating therefrom a fault message indicative of abnormalities in fiber spans within an ODN of the PON used to transmit optical signals to the optical receiver.

Another example embodiment may take the form of a method of monitoring optical fiber spans within an ODN, where the method includes identifying one or more PON receivers for use in monitoring the ODN, locating a polarization sensing element at each identified PON receiver, and at each identified PON receiver, monitoring changes in polarization of a received optical signal and generating a fault message when polarization changes become greater than a defined noise threshold, the fault message indicative of an abnormal condition at a fiber span along a signal path through the ODN to the identified PON receiver.

### Brief Description of the Drawings

FIG. 1 is block diagram of a PON including polarization sensing elements located at various receiver locations;
FIG. 2 is a more detailed block diagram of one example of the disclosed polarization sensing element used for monitoring fiber conditions within the PON;
FIG. 3 is a first example plot of polarization-related data that may be collected for monitoring in the disclosed polarization sensing element;
FIG. 4 is a pair of plots related to a second example of data collected for monitoring in the disclosed polarization sensing element;
FIG. 5 depicts an example embodiment of a polarization sensing element as used in combination with an optical receiver at an ONU;
FIG. 6 depicts an example embodiment of a polarization sensing element as used in combination with an optical receiver at an OLT;
FIG. 7 is a block diagram of a PON similar in architecture to that of FIG. 1, in this case illustrating the reporting of fault messages from several ONUs as utilized by the OLT to discern the location of the fiber abnormality; and
FIG. 8 is a detailed block diagram of a second example of the disclosed polarization sensing element, in this case as used with a PON receiver including an SOA.

### Detailed Description of Illustrative Embodiments

It is proposed to incorporate polarization sensing of received optical signals and monitor the polarization characteristics to recognize significant changes in polarization over a period of time. Sensing the polarization of light enables detection of changes in one or more fiber spans of the ODN as a result of, for example, instances of temperature change, vibrations, bending of the fiber, etc. (referred to at times hereafter as "abnormalities in the ODN").

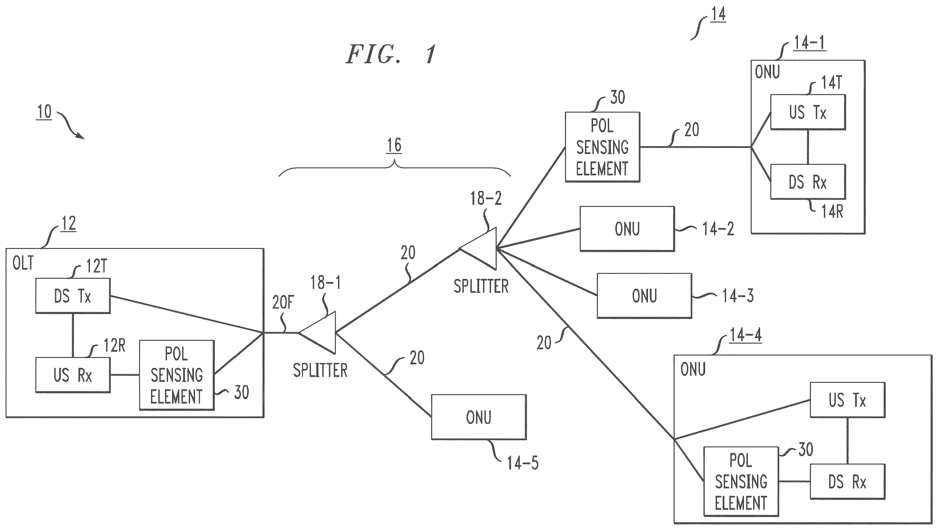

FIG. 1 depicts an example PON 10 incorporating polarization sensing elements within selected receiver components to monitor fiber conditions within the ODN. PON 10 consists of an OLT 12 that communicates with a plurality of individual ONUs 14 via an ODN 16. ODN 16 is configured as a passive arrangement, with power splitters 18 used at various locations/levels within ODN 16 to create a point-to-multipoint (P2MP) connection between OLT 12 and the plurality of ONUs 14. OLT 12 is shown as including a downstream (DS) transmitter 12T and an upstream (US) receiver 12R for communicating with the plurality of ONUs 14 in a known manner. Similarly, each ONU 14-i includes a DS receiver 14R and an US transmitter 14T. For the sake of discussion, ODN 16 is shown as including a pair of optical splitters 18-1, 18-2 utilized to create the tree-and-branch topology of individual fiber spans 20 that make up the signal paths between OLT 12 and ONUs 14. ODN 16 specifically includes a feed fiber 20F that couples OLT 12 to ODN 16.

**As** mentioned above, one modulation scheme that has been favored for use in a PON system is intensity-modulated direction-detection (IM-DD). In IM-DD, a radio-frequency data signal modulates the intensity of an optical carrier at a PON transmitter. For demodulation at a PON receiver, the optical carrier is directly detected and converted to the electrical domain by a relatively simple, conventional photodetector.

It is proposed to take advantage of these relatively simple IM-DD PON receiver configurations (i.e., for either/both ONU receiver 14R and OLT receiver 12R) to extract information about operating conditions within ODN 16, particularly abnormalities in the environment of individual fiber spans 20. Specifically, it is proposed to utilize a polarization sensing element 30 in combination with a selected PON receiver (i.e., one or more ONU receivers 14R, as well as OLT receiver 12R) to detect fluctuations in the received power along orthogonal polarization states of the received signal. While the IM-DD PON receiver is polarization insensitive, the received signal may be further processed into separate polarization components that are thereafter monitored. When a semiconductor optical amplifier (SOA) is used in a PON receiver, the inherent polarization-dependent gain (typically ignored) may be tracked and use to sense changes in the fiber conditions within ODN 16.

As mentioned above, polarization fluctuations may be analyzed to recognize an indicator of a physical problem along one or more fiber spans forming the ODN. For example, changes in the polarization may be related to the presence of vibrations along a fiber span, or a significant change in temperature in the area of fiber span, or even a severe fiber bend or the like. Unlike the type of fiber monitoring data associated with the use of an OTDR, the disclosed principles are directed to obtaining information about the health of the fiber spans in a PON system without incurring a significant increase in the cost or complexity of the system.

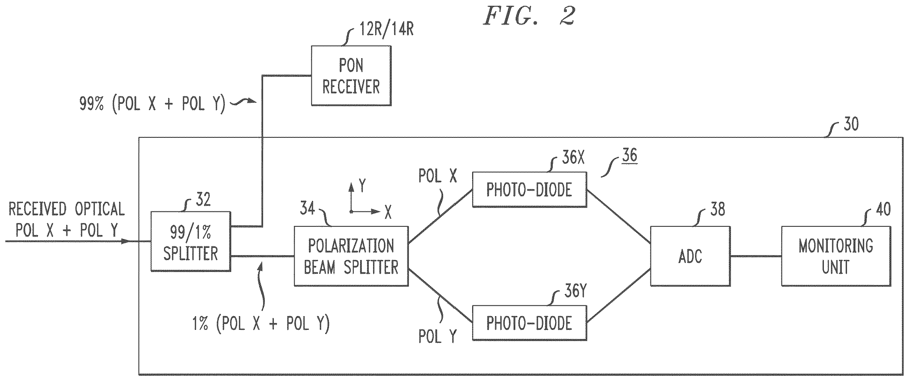

FIG. 2 contains a more detailed illustration of an example polarization sensing element 30 which is useful in understanding the sensing principles of this disclosure. A received optical signal is first passed through an asymmetrical optical splitter 32 included within polarization sensing element 30. Asymmetrical splitter 32 is used to remove a minimal amount of the received signal (perhaps 1% of the received optical power, typically no more than about 10%) for further use within polarization sensing element 30. The remainder (majority) of the received signal is directed into the PON receiver for conventional data recovery (either OLT receiver 12R or ONU receiver 14R).

Continuing with the discussion of polarization sensing element 30. The removed portion of the received signal is shown applied as an input to a polarization beam splitter (PBS) 34. PBS 34 separates the optical input into orthogonal components, here referred to as X and Y polarization components. A pair of photodiodes 36 is then used to convert the polarized optical signal components into electrical representations of the received optical power, with photodetector 36X shown as receiving the X-polarization optical signal and photodetector 36Y receiving the Y-polarization optical signal. An analog to digital converter (ADC) 38 is used to digitize the analog outputs from photodiodes 36, with the digital representations of the received optical power for the X,Y polarization components provided as an input to a monitoring unit 40 for analysis.

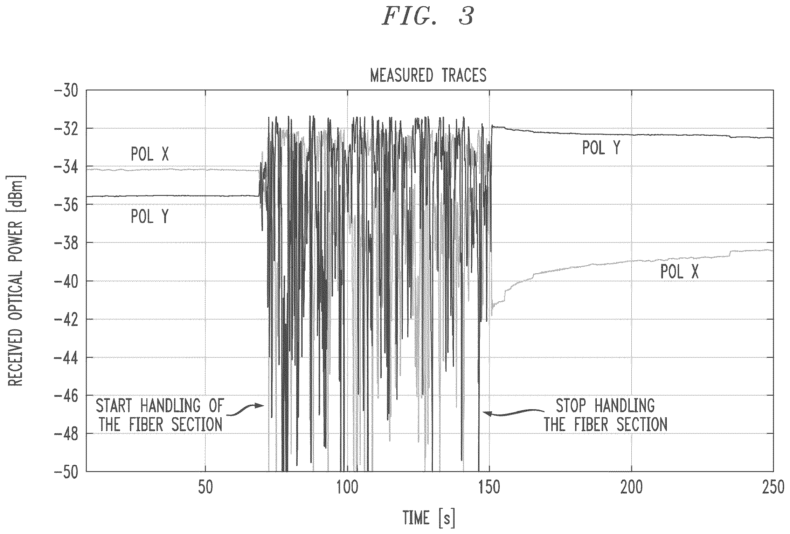

FIG. 3 is a graph depicting a set of example data that may be provided to monitoring unit 40 for use in indicating the potential presence of fiber span abnormalities with ODN 16. In this case, the example data was collected by subjecting a selected fiber span to a severe bend, and then observing the fluctuation in the polarization components as an optical signal passes through the bend. For the purposes of observation, a first time period (from about 0 to 75 seconds) is associated with an interval prior to imparting a bend to the fiber and illustrates the expected result; that is, where the received optical power in the X and Y polarization components maintain essentially the same power levels (regardless of the split between the two components). Upon the creation of a fiber bend at about 75 seconds, the introduction of fluctuations in the power components along each polarization state becomes quite evident. In one embodiment monitoring unit 40 is provided with a threshold value for use in determining when a change in polarization is sufficient to generate a "fault" message (that is, the threshold may be employed to ensure that minor fluctuations in polarization associated with conventional noise sources do not trigger a fault message).

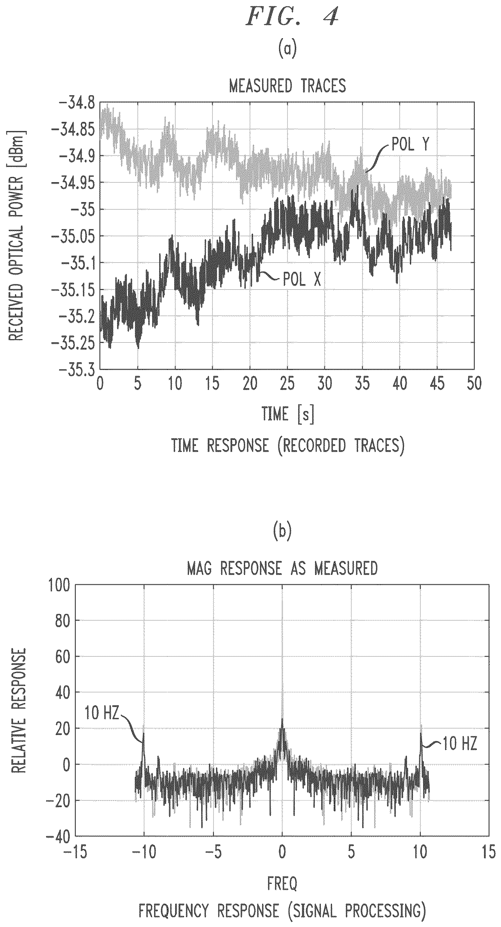

FIG. 4 includes experimental results associated with subjecting a fiber span to a 10 Hz vibration, which is used here to simulate a local physical change in the environment of a specific fiber span (e.g., structural problems in the area of the fiber span). FIG. 4(a) is a plot of X and Y polarization components as a function of time during a vibration event, with FIG. 4(b) depicting this information in the frequency domain. A perturbation at ±10 Hz is evident in the plot of FIG. 4(b).

It is an important aspect of the present disclosure that the polarization changes recognized by polarization sensing element 30 are conveyed to an appropriate network element for confirmation of a fault condition at an identified fiber span and remediation (if necessary). Indeed, when polarization sensing element senses a change related to vibration conditions, an alarm may be ultimately sent (via the OLT, perhaps) to the organization in change of the physical plant structure.

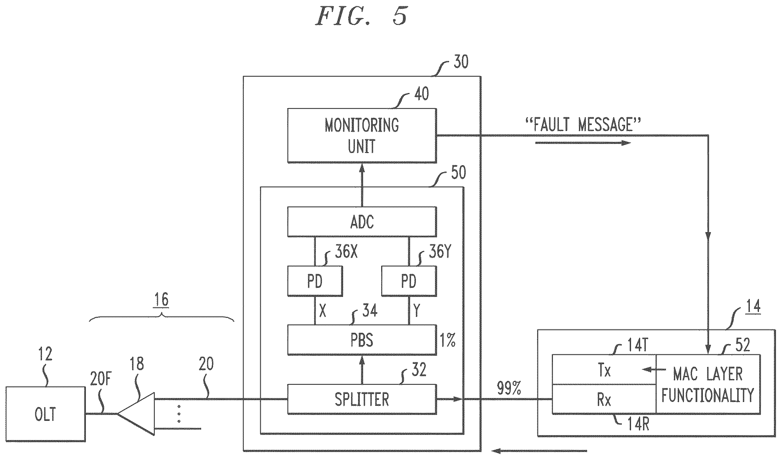

FIG. 5 illustrates one embodiment of a polarization sensing element 30 located at an ONU receiver 14R, showing an example of a method of conveying a fault message back upstream to OLT 12. In this example, polarization sensing element 30 is depicted as positioned as an external component to ONU 14. Here, the combination of optical splitter 32, PBS 44, PDs 36, and ADC 38 are illustrated as forming an O/E subassembly 50. An incoming received signal is directed into splitter 32, with a majority of the signal power (here, 99%) directed toward ONU receiver 12R and the remaining low power signal forwarded to PBS 34. The output from ADC 38 may take the form of the data as shown in FIGs. 3 and/or 4 (for example), which is forwarded to monitor circuit 40.

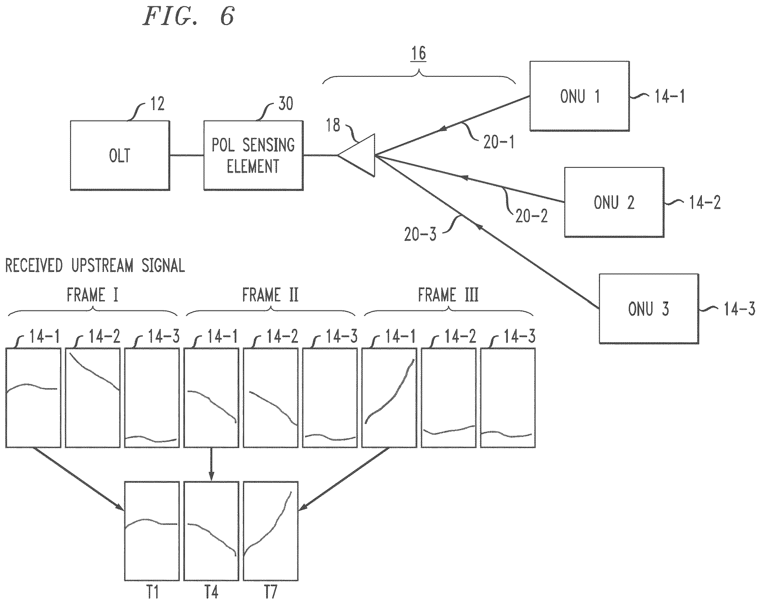

Upon recognition of a change in the polarized power components above defined threshold, monitoring unit 40 generates an electrical fault message, which in accordance with this embodiment of the disclosure is forwarded to a medium access control (MAC) layer functionality component 52 of ONU 14. As known in the art, the MAC layer is used in an ONU to embed certain "media" flags within a message to be sent back upstream to an OLT, for example, as a PLOAM (physical layer operation administration and maintenance) message. With reference to FIG. 6, MAC layer component 52 directs fault message into ONU transmitter 14T for transmission upstream through ODN 16 to OLT 12. Upon reception at OLT 12, the fault message is used to initiate a maintenance operation (or other appropriate action) along the downstream signal path to the specific ONU 14 identified in the fault message.

As opposed to this use of polarization sensing to recognize abnormalities in the downstream signal paths, a polarization sensing element 30 may be co-located with an OLT receiver 12R and used to recognize abnormalities along the upstream signals through ODN 16.

FIG. 6 depicts one implementation of polarization sensing element 30 that may be used with OLT receiver 12R for sensing fiber abnormalities along a given fiber span supporting upstream communication between given ONU 14 and OLT 12. In this example, it is presumed that a burst mode communication scheme is used to control (schedule) communications between the individual ONUs 14 and OLT 12. In general, the burst mode scheme is a TDM-based arrangement that assigns one or more specific time slots to each ONU 14 for use in sending upstream data communications to OLT 12.

The example arrangement as shown in FIG. 6 includes a set of three ONUs (ONU 14-1, ONU 14-2, and ONU 14-3) in communication with OLT 12 via ODN 16. Here, ODN 16 includes a single splitter 18 (when used in this upstream example, functioning as a combiner), with a set of three individual fiber spans 20-1, 20-2, 20-3 coupled between splitter 18 and ONUs 14 -1, 14-2, and 14-3, respectively. In this simple example, each UNU 14-i is assigned a single time slot for upstream communication in a given frame. The upstream signals are first passed through OLT polarization sensing element 30 (which may take the form of element 30 as shown in FIG. 3), with a majority of the received signal passing along into OLT receiver 12R and the remaining used for polarization sensing within element 30.

Also shown in FIG. 6 is a series of outputs from, for example, ADC element 38 of polarization sensing element 30. The outputs are depicted as a set of three frames (I, II, III), with each frame comprising a set of three time slots associated with the three ONUs 14 in the manner defined above. The first time slot T1 is associated with ONU 14-1, second time slot T2 with ONU 14-2, and the third time slot T3 associated with ONU 14-3. Similar to the operation of polarization sensing element 30 in conjunction with an ONU, monitoring unit 40 within the OLT polarization sensing element 30 tracks the generated polarization information for each individual upstream transmission and generates a fault message when a change in polarization beyond a defined threshold is observed.

Separated out for illustrative purposes in FIG. 6 are the time slots associated with ONU 14-1 as extracted from the transmitted set of frames. When tracked by monitor circuit 40, the change in polarization (particularly between the second and third frames) rises to an above threshold level, prompting the generation of a "fault message" as associated with the upstream signal path between ONU 14-1 and OLT 12. Monitoring unit 40 of polarization sensing element 30 will forward this fault message to an appropriate network element for further study of fiber span 20-1 (in this example).

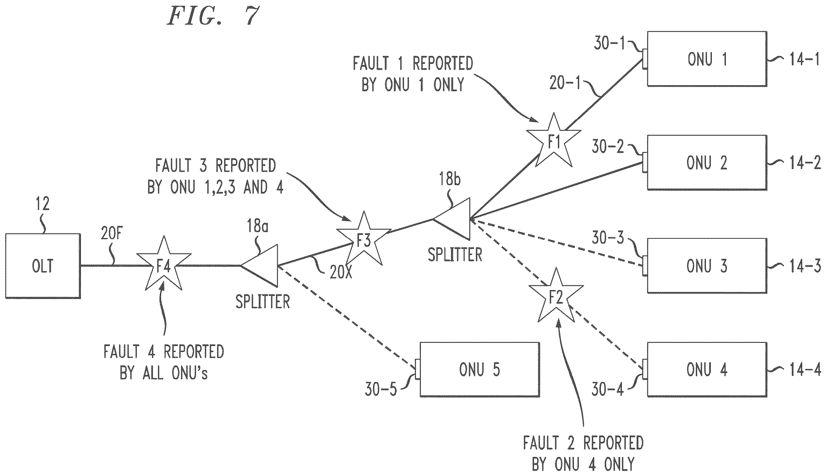

As mentioned above, it is not a requirement to include a polarization sensing element 30 with each PON receiver. For example, only selected ONUs 14 may be designated as candidates for polarization sensing based on monitoring needs, known topology concerns with ODN 16, and the like. However, it follows that using a relatively large number of polarization sensing elements 30 increases the accuracy of identifying the specific fiber spans exhibiting abnormal behavior. To illustrate this point, FIG. 7 provides examples of using polarization sensing elements at multiple ONU locations.

FIG. 7 is a simplified reproduction of PON 10 of FIG. 1, where in this case each ONU 14 is equipped with a polarization sensing element 30 (as an internal component of ONUs 14-1 and 14-5, and as a stand-alone external component associated with ONUs 14-2, 14-3, and 14-4. A set of four fiber faults are shown in the diagram as F1, F2, F3, and F4. OLT 12 receives polarization sensing information (e.g., "fault messages") from all of the ONUs 14, such as by using PLOAM messages as discussed above in association with FIG. 4.

Continuing with reference to FIG. 7, OLT 12 is able to identify the particular fiber faults by tracking which ONUs are reporting problems. For example, if only ONU 14-1 is reporting fault F1, the fiber span having a problem is immediately identified by OLT 12 as the individual span 20-1 between splitter 18b and ONU 14-1. Similarly, if OLT receives fault message F2 from only OLT 14-1, it can be presumed that fiber span 20-4 is exhibiting abnormal behavior.

In another example, suppose OLT 12 receives the same fault message F3 from the collection of ONUs 14-1 through 14-4. In this case, OLT 12 can presume that fiber span 20x connecting first splitter 18a and second splitter 18b is experiencing a problem. Finally, if all of the ONUs in PON 10 are reporting a polarization sensing change, then the problem mostly likely exists in feeder fiber span 20F.

The changes/variations in polarization state that are being sensed are very low in frequency when compared to data rates used for transmission of optical signals. For example, the changes may typically be on the order of tens of Hz, as compared to a 7 GHz data signal used in an XGS-PON system. As a result, photodetectors 36 need not exhibit a high level of responsivity and may comprise low-speed (and thus low-cost) conventional photodiodes. Presuming that asymmetrical optical splitter 32 is a 99%/1% device (which is preferable in terms of directing most of the signal power into the receiver itself), the degradation in receiver sensitivity is only about 0.04 dB. If the splitter is modified to be a 90/10 device, the degradation in receiver sensitivity still remains rather low - on the order of about 0.5 dB, where the increase in optical power presented to polarization sensing element provides an increase in polarization sensing responsivity of 10 dB to a level of about -30 dBm.

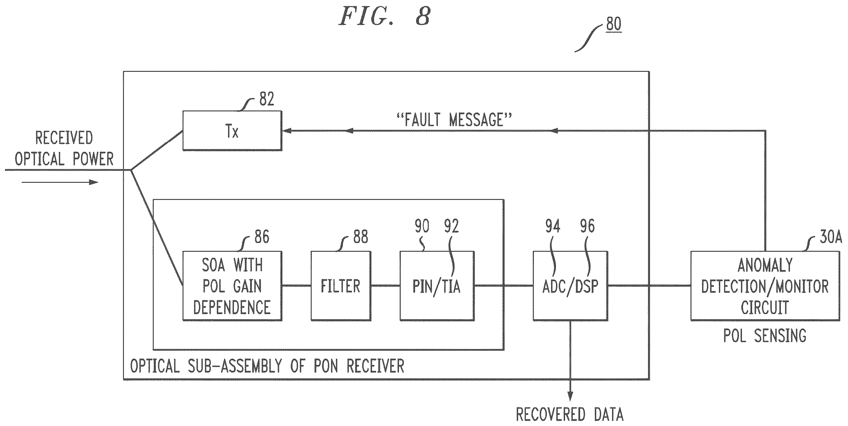

While the above embodiments and examples are based upon the use of a conventional APD-based PON receiver, it is to be understood that the same principles of using polarization sensing to identify fiber problems may be used with a PON receiver based on the combination of a semiconductor optical amplifier (SOA) with a PIN photodetector (referred to at times as an SOA-PIN receiver). FIG. 8 illustrates an example of this embodiment.

SOA-PIN based receivers may be used in situations where the incoming optical power needs to be amplified prior to initiating data recovery, such as for higher power budget applications. Thus, the received beam is first passed through the amplifying device to impart additional gain and improve the accuracy of the recovered data signal. While not a desired feature for most situations, SOAs are known to typically exhibit a polarization-dependent gain on the order of about 1-2 dB (or higher). This polarization factor can thus be exploited in this disclosure to sense polarization changes in the fiber without the need to utilize polarization beam splitters and other components as described above.

Therefore, if a fiber abnormality develops along the signal path to the SOA-PIN receiver, the associated change in polarization state of the propagating signal will result in a (slight, 1-2dB) change in gain generated by the SOA device. As a result, the optical power of the amplified signal received at the PIN-based receiver will change as well. In accordance with this embodiment of the disclosure, the change in optical power is monitored in the form of electrical current variation through the PIN. As long as the gain of the SOA is high enough, variations in the gain attributed to polarization changes in the fiber are not considered to be significant enough to impact the overall receiver performance.

FIG. 8 illustrates a PON element 80 including a transmitter 82 and SOA-PIN receiver 84. A polarization sensing element 30A is shown as used in combination with PON element 80. However, in contrast to the above-described embodiment, polarization sensing element 30A is positioned at the output of the data recovery process within receiver 84 instead of at the input. Thus, as shown in FIG. 8, the received optical signal is first applied as an input to SOA 86 of PON receiver 84, which functions in a manner well understood in the art to impart additional gain to the received optical signal, forming an amplified optical signal. The amplified optical signal is then typically passed through a filter 86 to control the optical bandwidth of the received signal, with the amplified and filtered optical signal then directed into a PIN photodetector 88 for conversion to an electrical current. A transimpedance amplifier 90 is used to translate the current signal into a voltage representation. The electrical voltage is then provided as an input to ADC 92 for digitizing and a specialized digital signal processor (DSP) 94 for data recovery.

In accordance with the principles of this disclosure, polarization sensing element 30A may utilize the electrical output signals from either one or both of ADC 92 and DSP 94 to look for changes/fluctuations in the power levels present in orthogonal polarization states of the received signal. As known in the art, the signal gain created within SOA 86 exhibits a polarization-dependent response. Thus, if a fiber span along the path into PON element 80 experiences a perturbation that modifies the polarization, the gain achieved by SOA 86 will change as well. Over time, therefore, polarization sensing element 30A is able to track a current state of polarization of the recovered data signal and flag a fault occurrence when a change in polarization state rises above a defined threshold.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope. Indeed, from the present disclosure and drawings, other embodiments falling within the scope of the claims may become apparent to those of ordinary skill in the art.

## Claims

1. An apparatus, comprising a polarization sensing element (30, 30A) coupled to an optical receiver in a passive optical network, PON, (10), the polarization sensing element (30, 30A) configured to extract polarization-dependent information from a received optical signal and monitor the extracted polarization-dependent information to recognize changes in polarization above a defined threshold, generating therefrom a fault message indicative of abnormalities in fiber spans (20-1, 20-2, 20-3) within an optical distribution network, ODN, (16) of the PON (10) used to transmit optical signals to the optical receiver.

2. The apparatus of claim 1, wherein the fault message is indicative of physical changes in a fiber span (20-1, 20-2, 20-3) itself as well as environmental changes surrounding the fiber span (20-1, 20-2, 20-3) such as vibrational and temperature changes.

3. The apparatus of claim 1, wherein the polarization sensing element (30, 30A) is coupled to an optical network unit, ONU, (14) optical receiver and used to recognize polarization changes in a downstream transmission from an optical line terminal, OLT, (12) to the ONU (14).

4. The apparatus of claim 3, wherein the fault message generated by the ONU (14) polarization sensing element (30, 30A) is provided as an input to an optical transmitter at the ONU (14) for upstream transmission to the OLT (12).

5. The apparatus of claim 1, wherein the polarization sensing element (30, 30A) is coupled to an OLT (12) optical receiver and used to recognize polarization changes in upstream messages from a plurality of individual ONUs (14) within the PON (10).

6. The apparatus of claim 5, wherein the OLT (12) optical receiver is configured as a burst mode device, with upstream signals from different ONUs (14-i) received during different time slots assigned by the OLT (12), and wherein the polarization sensing element (30, 30A) utilizes the OLT (12) time slot assignment information to ascertain the identity of a specific ONU (14-i) experiencing fiber abnormalities within the ODN (16) along the signal path between the specific ONU (14-i) and the OLT (12).

7. The apparatus of claim 1, wherein the polarization sensing element (30, 30A) is disposed at the input to the PON (10) optical receiver and further comprises:
- an asymmetric optical splitter (32) responsive to the received optical signal and configured to create a first portion having a majority of the received optical signal power and a second portion of the remaining power, the first portion directed into the PON (10) optical receiver;
- a polarization beam splitter (34) responsive to the second portion and separating the second portion into orthogonally polarized optical signal components;
- an O/E component coupled to the output of the polarization beam splitter (34) for converting the orthogonally polarized optical signal components into electrical signals related thereto; and
- a monitor circuit (40) coupled to the output of the O/E component and configured to recognize changes in the electrical signal representations of the polarized optical signal components that exceed a defined threshold, the monitor circuit (40) generating a fault message output signal upon exceeding the defined threshold.

8. The apparatus of claim 6, wherein the polarization sensing element (30, 30A) is incorporated as a component within an assembly of the PON (10) optical receiver or wherein the polarization sensing element (30, 30A) takes the form of a stand-alone component disposed at an input of the PON (10) optical receiver.

9. The apparatus of claim 1, wherein the polarization sensing element (30, 30A) is used in association with a PON (10) optical receiver including a semiconductor optical amplifier ,SOA, (86) device that exhibits a polarization-dependent optical gain, the polarization sensing element (30, 30A) disposed to receive an output electrical signal from the PON (10) optical receiver and monitor gain fluctuations to sense the presence of fiber abnormalities in the ODN attributed to changes in polarization of the optical signal passing through the SOA (86).

10. An apparatus, comprising:
- a plurality of polarization sensing elements (30, 30A), each polarization sensing element (30, 30A) associated with a separate optical network unit, ONU, (14) optical receiver of a passive optical network, PON, (10) in a one-to-one relationship,
each polarization sensing element (30, 30A) configured to extract polarization-dependent information from a received optical signal and monitor the extracted polarization-dependent information to recognize changes in polarization above a defined threshold, generating therefrom a fault message indicative of abnormalities in fiber spans within an optical distribution network, ODN, (16) of the PON (10) used to transmit optical signals from an optical line terminal, OLT, (12) to the associated ONU (14) optical receiver.

11. The apparatus of claim 10, wherein a fault message generated by one or more polarization sensing elements (30, 30A) of the plurality of polarization sensing elements (30, 30A) is transmitted upstream to the OLT (12) as an ODN (16) maintenance message.

12. The apparatus of claim 11, wherein the OLT (12) is configured to analyze the fault message received from one or more polarization sensing elements (30, 30A) and ascertain therefrom an identity of a specific fiber span (20-1, 20-2, 20-3) within the ODN (16) experiencing abnormal functionality.

13. A method of monitoring optical fiber spans (20-1, 20-2, 20-3) within an ODN (16), comprising:
- identifying one or more PON (10) receivers for use in monitoring the ODN (16);
- locating a polarization sensing element (30, 30A) at each identified PON (10) optical receiver; and
- at each identified PON (10) optical receiver,
∘ monitoring changes in polarization of a received optical signal; and
∘ generating a fault message when polarization changes become greater than a defined noise threshold, the fault message indicative of an abnormal condition at a fiber span (20-1, 20-2, 20-3) along a signal path through the ODN (16) to the identified PON (10) optical receiver.

14. The method of claim 13, further comprising:
- identifying a plurality of ONU (14) optical receivers as the one or more PON (10) optical receivers; and
- transmitting generated fault messages upstream through the ODN (16) to a monitoring element at the OLT (12), including an identification of the transmitting ONU (14) optical receiver within the fault message.

15. The method of claim 13 wherein the polarization sensing element (30, 30A) is associated with an OLT (12) optical receiver, the method comprising:
- reviewing upstream information received from a plurality of ONU (14) transmitters in assigned time slots;
- monitoring changes in polarization occurring with time slots assigned to a defined ONU (14) transmitter; and
- generating a fault message identifying a signal path between the defined ONU (14) and the OLT (12), wherein one or more fiber spans (20-1, 20-2, 20-3) along the identified signal path may be experiencing abnormal functionality.
